# EUROPÄISCHE PATENTANMELDUNG

(11) **EP 4 544 904 A1**
(43) Veröffentlichungstag der Anmeldung: **30.04.2025**
(21) Anmeldenummer: 24209068.6
(22) Anmeldetag: 25.10.2024
(51) Int. Cl.: A01G 27/06, E02B 13/00

(54) **VERTIKAL-FÖRDEREINHEIT UND FÖRDEREINRICHTUNG FÜR WASSER**

(30) Priorität: 25.10.2023 DE 202023106175 U
(71) Anmelder: Funke Kunststoffe GmbH, 59071 Hamm-Uentrop (DE)
(72) Erfinder: Funke, Matthias, 48324 Sendenhorst (DE); Funke, Christian, 48324 Sendenhorst (DE)
(74) Vertreter: Patentanwälte Olbricht Buchhold Keulertz

(57) **Zusammenfassung**

Bei einer Vertikal-Fördereinheit (4) für Wasser (2), die ein Kapillarmaterial mit benetzender Kapillarwirkung aufweist und im Gebrauch in der Art angeordnet ist, dass sie sich von einem Wasser (2) führenden, unteren Niveau aufwärts bis zu einem höher liegenden, oberen Niveau erstreckt, schlägt die Erfindung vor, dass das Kapillarmaterial druckfest ausgestaltet ist oder eine druckfeste Ummantelung (7) aufweist. Weiterhin schlägt die Erfindung eine Vertikal-Fördereinrichtung (1) für Wasser (2) mit einem Wasserspeicher (3) und mit einer solchen Fördereinheit (4) vor sowie die Verwendung eines Kapillarmaterials mit benetzender Kapillarwirkung, das druckfest ausgestaltet oder druckfest ummantelt ist, in einer solchen Vertikal-Fördereinheit.

## Beschreibung

Aus der EP 3 718 393 A1 ist ein modulares Pflanzsystem bekannt, das auch als Pflanzturm bezeichnet ist und ein regalartiges Gestell aufweist, das als Profilrohr-Stecksystem-Struktur ausgestaltet ist und mehrere im Abstand übereinander angeordnete horizontale Rahmen bildet. In jeden derartigen Rahmen kann ein flacher, wannenartiger Topf aus wasserundurchlässigem Material eingehängt werden, der zur Aufnahme von Wasser und Pflanzsubstrat dient. Ein Bewässerungseinsatzelement wird in den Topf eingesetzt und dient zur Kapillar-Absorptions-Bewässerung von unten. Hierzu weist das Bewässerungseinsatzelement eine oder mehrere Mulden auf, die jeweils zur Aufnahme einer Pflanze dienen und als Ausnehmungen bezeichnet sind. Am Boden der jeweiligen Ausnehmung ist eine Öffnung vorgesehen, um die erwähnte Kapillar-Absorptions-Bewässerung zu ermöglichen. Eine hohe Standfestigkeit des Pflanzturms wird dadurch erreicht, dass der Schwerpunkt des modularen Pflanzsystems innerhalb der Profilrohr-Stecksystem-Struktur liegt.

Unter den Begriffen "Schwammstadt" und "Blau-Grüne Infrastruktur" werden verschiedene Maßnahmen zusammengefasst, die dazu dienen, im urbanen Raum Niederschlagswasser ortsnah zu speichern und zu einem späteren Zeitpunkt wieder an die Vegetation oder zur Verdunstung abgegeben. Dadurch, dass Niederschlagswasser zwischengespeichert und zeitversetzt wieder abgegeben wird, sollen einerseits Überlastungen der Kanalisation vermieden, was das Abführen des Niederschlagswassers betrifft, und andererseits sollen Trockenperioden überbrückt werden, was die Nutzung des Niederschlagswassers betrifft, z. B. zur Pflanzenbewässerung. Zur Speicherung werden unterschiedliche bekannte Wasserspeicher genutzt. Es werden Speichermöglichkeiten mit Hilfe von Rigolenkörpern geschaffen, die unter anderem beispielsweise in Form von Kunststofftanks oder Rohren, grobkörnigen Substraten wie einer Kiesschüttung, oder offenporigen Substraten ausgestaltet sein können.

Das Niederschlagswasser wird häufig über Einlaufpunkte wie Straßenabläufe, Rinnen, unter Fallrohren von Dachentwässerungen etc. gesammelt. Diese Bauteile weisen jeweils für sich gesehen schon eine gewisse Einbautiefe im Boden auf. Von diesen Einlaufpunkten führen häufig Leitungen im Freigefälle zu den oben beschriebenen Wasserspeichern, die wegen des erwähnten Gefälles noch tiefer im Boden liegen müssen. Die Freigefälle- oder Freispiegelleitung ist in der Praxis die bevorzugte Möglichkeit, um Wasser von einem ersten Punkt A zu einem zweiten Punkt B zu transportieren, da sie nach der Verlegung der Rohre in der Regel nur sehr geringe Unterhaltskosten erfordert, zum Beispiel für Reinigungsarbeiten. Ein Transport des Wassers von A nach B durch Pumpentechnik erfordert im Vergleich zu einer Freigefälleleitung einen erheblich höheren Installationsaufwand und ist dazu auch noch mit hohen laufenden Kosten für Wartung, Ersatzbeschaffung und Energie verbunden.

Freispiegelleitungen haben allerdings den Nachteil, dass die Leitungen im Gefälle verlegt sein müssen. Je nach Abstand zwischen dem Einlaufpunkt und dem Wasserspeicher entsteht ein entsprechend großer Höhenunterschied, der in solchen Fällen auch als Höhenverlust bezeichnet wird, in denen letztlich das Niederschlagswasser doch wieder annähernd auf das Höhenniveau der Bodenoberfläche gefördert werden soll und somit angehoben werden muss. Je nach Auslegung des Wasserspeichers addiert sich zu diesem Höhenunterschied oder Höhenverlust noch ein gewisser Abstand von der Rohrsohle des Einlaufrohres bis zum unteren Punkt des Wasserspeichers.

Um das gesamte gespeicherte Wasser beispielsweise zur Bewässerung der Vegetation nutzen oder es zugunsten des Stadtklimas verdunsten zu können, muss es in die Nähe der Bodenoberfläche gefördert werden und der Höhenunterschied überwunden bzw. der Höhenverlust ausgeglichen werden. Es bedarf somit einer Vertikal-Fördereinheit, wobei im Rahmen des vorliegenden Vorschlags nicht gemeint ist, dass das Wasser ausschließlich in tatsächlich vertikaler Strömungsrichtung gefördert wird, sondern dass ein vertikaler Höhenunterschied zwischen einem unteren und einem geodätisch höheren Niveau mittels der Vertikal-Fördereinheit überwunden wird.

Der Erfindung liegt die Aufgabe zugrunde, eine Vertikal-Fördereinheit anzugeben, mittels welcher Wasser aus einem Wasser führenden, unteren Niveau aufwärts zu einem höher liegenden, oberen Niveau gefördert werden kann, und welche wirtschaftlich installiert und betrieben werden kann. Der Erfindung liegt weiterhin die Aufgabe zugrunde, eine Vertikal-Fördereinrichtung anzugeben, welche mit den gleichen Vorteilen eine Wassernutzung über einen längeren Zeitraum, weitgehend unabhängig von Niederschlägen und ohne die Erfordernis eines Anschlusses an ein Wasserleitungsnetz ermöglicht.

Zur Lösung dieser Aufgabe schlägt die Erfindung eine Vertikal-Fördereinheit nach Anspruch 1 und eine Vertikal-Fördereinrichtung nach Anspruch 19 sowie eine Verwendung von Kapillarmaterial nach Anspruch 23 vor. Vorteilhafte Ausgestaltungen sind in den Unteransprüchen beschrieben.

Die Erfindung schlägt mit anderen Worten eine Fördereinheit vor, die Wasser durch eine benetzende Kapillarwirkung eines Materials von dem unteren zu dem oberen Niveau aufwärts fördern und praxisrelevante Höhenunterschiede überbrücken kann, so dass das Material im Rahmen des vorliegenden Vorschlags dementsprechend als Kapillarmaterial bezeichnet wird. Die praxisrelevanten Höhenunterschiede betragen in vielen Fällen beispielsweise 50 bis 80 cm, gerechnet von einem unteren Niveau, nämlich dem ansaugenden unteren Ende des Kapillarmaterials, was den tiefsten Wasserspiegel des bereitgestellten Wassers definiert, bis zu einem oberen Niveau, nämlich der Stelle, wo die Fördereinheit das kapillar geförderte Wasser zur Bewässerung oder Verdunstung abgibt.

Das Kapillarmaterial enthält in einer Ausgestaltung Fasern und weist eine faserige Struktur auf, vergleichbar einem Kerzendocht. Die Fasern können sich insbesondere in Längsrichtung, nämlich in der gewünschten Förderrichtung erstrecken. Beispielsweise können Naturfasern zum Einsatz kommen oder ein textiles Material, beispielsweise aus verrottungsfesten Werkstoffen, wie sie z.B. aus dem Bereich der Geotextilien bekannt sind und aus Kunststoff bestehen können.

Das Kapillarmaterial ist in einer Ausgestaltung porös ausgestaltet, beispielsweise in Form von Gips oder Lehm, oder in Form von gebranntem Keramikmaterial wie z.B. weich gebranntem Klinker.

Das Kapillarmaterial ist in einer Ausgestaltung verformbar, wie das erwähnte Fasermaterial oder als formlose Masse, die als Stampfmasse in eine beliebige Form gebracht werden kann, wie dies im Fall der Lehm- oder Gipswerkstoffe der Fall ist.

Das Kapillarmaterial liegt in einer Ausgestaltung fest und unverformbar als formstabiler, druckfester Körper vor, wie dies bei dem erwähnten gebrannten Keramikmaterial der Fall ist.

Für den Einsatz im öffentlichen Raum, nämlich in einem Boden, der nach der Installation der Fördereinheit zugunsten der Begehbarkeit verdichtet werden soll, um beispielsweise Gehwege oder Fahrbahnen anlegen zu können, ist erfindungsgemäß das Kapillarmaterial entweder druckfest ausgestaltet oder mit einer druckfesten Ummantelung versehen. Der Begriff druckfest bezeichnet im Sinne der vorliegenden Erfindung, dass die beim Auftreten praxisüblicher Drücke innerhalb des Bodens, wie sie beim Verdichten der Bodenoberfläche entstehen, das Kapillarmaterial seine gewünschte Förderwirkung für das Wasser beibehält. Ein verformbares Kapillarmaterial ist daher erfindungsgemäß mit einer druckfesten Ummantelung versehen, so dass der kapillar durchströmbare Querschnitt nicht in einem unzulässigen Ausmaß durch von außen wirkende Druckkräfte verringert werden kann.

Je nachdem, wie groß der zu überwindende Höhenunterschied zwischen dem unteren und dem oberen Niveau ist, kann das Kapillarmaterial oder dessen Ummantelung eine geringfügige Verformung zulassen, beispielsweise eine Verringerung des inneren, freien Querschnitts der Ummantelung und in Folge eine Querschnittsverringerung des Kapillarmaterials selbst, wenn dennoch die Förderwirkung des Kapillarmaterials in einem solchen Maß erhalten bleibt, dass eine bestimmte, vorgegebene Wassermenge innerhalb einer bestimmten Zeiteinheit zum oberen Niveau gelangen kann. Die Menge des verwendeten Kapillarmaterials kann daher wirtschaftlich vorteilhaft umso geringer gehalten werden, je mehr eine druckfeste Ummantelung eine Verformung, insbesondere Querschnittsverringerung, des Kapillarmaterials unter den auftretenden Druckverhältnissen verhindert.

Eine druckfeste Ausgestaltung des Kapillarmaterials kann z. B. darin bestehen, dass es aus einem druckfesten Werkstoff besteht wie dem oben erwähnten Keramikmaterial. In diesem Fall ist eine Ummantelung nicht erforderlich, um das Kapillarmaterial beim Verdichten des Bodens gegen eine unerwünschte Verformung zu schützen. Daher kann ein druckfestes Kapillarmaterial unter Verzicht auf eine Ummantelung unmittelbar an umgebendes Erdreich angrenzen, so dass eine besonders großflächige Abgabe von Wasser aus dem Wasserspeicher an das Erdreich ermöglicht wird.

Dennoch kann die Fördereinheit auch bei Verwendung eines druckfesten Kapillarmaterials eine Ummantelung aufweisen. Diese kann beispielsweise als Wassersperre dienen, um eine Feuchtigkeitsabgabe ausschließlich an bestimmten Stellen der Fördereinheit zuzulassen, beispielsweise an deren oberem Ende.

Weiterhin kann eine Ummantelung dazu dienen, unterschiedliche Werkstoffe des Kapillarmaterials zusammenzuhalten. In einer Ausgestaltung besteht das Kapillarmaterial aus einem Kern und einem den Kern umgebenden Füllmaterial. Sowohl der Kern als auf das Füllmaterial weisen die gewünschten benetzenden kapillaren Eigenschaften auf. Während der Kern aus einem festen Material mit einer definierten Form bestehen kann, dient das Füllmaterial dazu, Spalten zwischen dem Kern und der umgebenden Ummantelung auszufüllen. Dies ermöglicht eine besonders wirtschaftliche Ausgestaltung der Fördereinheit, da die Ummantelung nicht speziell und passgenau an die Formgebung des Kerns angepasst sein muss, so dass vielmehr handelsüblich erhältliche Halbzeuge wie z.B. Rohre als Ummantelung verwendet werden können, die hinsichtlich der Querschnittsabmessungen und / oder der Querschnittsform vom Querschnitt des Kerns abweichen.

Auch falls in einer Ausgestaltung der Fördereinheit der Kern des Kapillarmaterials aus mehreren einzelnen Elementen in Form von Blöcken, Strängen oder dergleichen zusammengesetzt ist, kann ein Füllmaterial eingesetzt werden, um die einzelnen Elemente kapillarwirksam miteinander zu verbinden und eine Unterbrechung der kapillaren Förderwirkung zu vermeiden bzw. diese Unterbrechung zu überbrücken. Die erwähnten Stränge des Kerns können beispielsweise nebeneinander angeordnet sein, um ein Bündel mit dem gewünschten Querschnitt des Kerns zu bilden und auf diese Weise den inneren Querschnitt der Ummantelung möglichst großflächig mit dem für den Kern verwendeten Kapillarmaterial auszufüllen. Die erwähnten Blöcke können in Längsrichtung der Fördereinheit aneinandergereiht sein, um auf diese Weise unter Verwendung standardisierter Elemente, nämlich der Blöcke, unterschiedlich lange - und dementsprechend im Gebrauch unterschiedlich hohe - Fördereinheiten zu schaffen.

Wenn das Füllmaterial die Eigenschaft aufweist, sich im Wasser aufzulösen, wie dies beispielsweise bei der Verwendung von formlosen Massen wie Lehm oder Gips als Füllmaterial der Fall sein kann, kann die Fördereinheit in einer Ausgestaltung einen Kern, ein den Kern umgebenden Füllmaterial sowie eine das Füllmaterial umgebende Ummantelung aufweisen, wobei die Ummantelung so ausgestaltet ist, dass sie für das Füllmaterial unpassierbar ist und das Füllmaterial somit zurückhält: entweder ist sie so feinporig, dass sie das Füllmaterial auch im Wasser zurückhält, oder sie ist wasserdicht. An ihrem unteren Ende, wo die Fördereinheit dazu bestimmt ist, in Wasser einzutauchen, umschließt die Ummantelung das Kapillarmaterial so weit, dass nur der Kern aus der Ummantelung nach unten ragt. Auf diese Weise wird vermieden, dass das Füllmaterial sich im Kontakt mit dem Wasser auflösen und aus der Ummantelung nach unten entweichen kann.

Bei dieser erwähnten Ausgestaltung, bei der ein Teil des unteren Stirnendes der Fördereinheit durch die Ummantelung abgedeckt ist, erfolgt die Wasseraufnahme am unteren Ende der Fördereinheit ausschließlich durch den Kern. Um die Wasseraufnahme am unteren Ende der Fördereinheit zu maximieren, also die Wassermenge, die pro Zeiteinheit von der Fördereinheit aufgenommen werden kann, kann sich der formstabile Kern über das untere Stirnende des Füllmaterials hinaus nach unten erstrecken, so dass die Kontaktfläche der Fördereinheit mit umgebendem Wasser vergrößert wird.

In einer Ausgestaltung ist die Ummantelung aus einem genormten Rohr hergestellt, so dass es an ebenfalls genormte Steckmuffen gemäß der DIN EN 1401 angeschlossen werden kann. Dies erleichtert den Anschluss, insbesondere auch einen wurzeldichten Anschluss, des Kapillarmaterials an einen Wasserspeicher, da aus der Wasserwirtschaft oder dem Bereich der Kanalisation bekannte und dementsprechend standardisierte, wirtschaftlich erhältliche Komponenten verwendet werden können, beispielsweise Rohre großen Nenndurchmessers als Wasserspeicher.

In einer Ausgestaltung ist das Kapillarmaterial mit einer wasserdichten Ummantelung versehen. Die druckfeste Ummantelung kann gleichzeitig auch wasserdicht ausgestaltet sein. Wenn jedoch beispielsweise das Kapillarmaterial selbst druckfest ist und keiner zusätzlichen druckfesten Ummantelung bedarf, kann dennoch eine Ummantelung vorteilhaft sein, die nämlich für Wasser nicht passierbar und somit wasserdicht ist. Eine wasserdichte Ummantelung dient dazu, Wasserverluste zu vermeiden, die durch eine nicht planmäßige Abgabe von Wasser an das umgebende Erdreich auftreten können, bevor das im Kapillarmaterial aufsteigende Wasser das obere Ende des Kapillarmaterials auf Höhe des oberen Niveaus erreicht, wo die Fördereinheit das kapillar geförderte Wasser zur Bewässerung oder Verdunstung bestimmungsgemäß abgibt. Wenn beispielsweise ein mineralisches Kapillarmaterial aufgrund seiner Materialeigenschaften grundsätzlich ermöglicht, das Wasser über eine Höhe von mehr als 1 m und sogar von mehreren Metern zwischen dem unteren und dem oberen Niveau zu fördern, können in einer bestimmten Einbausituation die erwähnten Wasserverluste dazu führen, dass die eigentlich mögliche Förderhöhe in der Praxis nicht erreicht wird. Die wasserdichte Ummantelung verhindert Wasserverluste und unterstützt daher, dass das Kapillarmaterial das Wasser über eine möglichst große Höhe transportieren kann.

Um einen weitgehend unterbrechungsfreien Betrieb zu ermöglichen und im Sinne der eingangs erwähnten Schwammstadt die zu verarbeitenden Wassermengen zeitlich zu vergleichmäßigen, weist die erfindungsgemäße Fördereinrichtung zusätzlich zu der Fördereinheit einen Wasserspeicher auf, in den Niederschlagswasser eingeleitet wird und der unterirdisch angeordnet wird. Die Fördereinrichtung ist daher nicht auf ein Wasserleitungsnetz angewiesen, welches Frischwasser in Trinkwasserqualität heranführt. Vielmehr muss lediglich das Niederschlagswasser in an sich bekannter Weise gesammelt und in den Wasserspeicher geleitet werden. Das Kapillarmaterial der Fördereinheit erstreckt sich bis in den Wasserspeicher, so dass ein Wassertransport aus dem Wasserspeicher nach oben ermöglicht wird, so lange das Kapillarmaterial der Fördereinheit Kontakt mit dem Wasser im Wasserspeicher hat.

In einer Ausgestaltung erstreckt sich das Kapillarmaterial der Vertikal-Fördereinheit von dem unteren Niveau über eine Höhendifferenz von wenigstens 50 cm, insbesondere wenigstens 80 cm, bis zu dem oberen Niveau. Je nach Auswahl des Kapillarmaterials und einer eventuell vorgesehenen wasserdichten Ummantelung können auch Höhendifferenzen von mehr als 1 m, sogar von mehreren Metern, überwunden werden.

Um zu verhindern, dass Wurzeln aufgrund ihres Größenwachstums Schäden an der Fördereinrichtung verursachen, beispielsweise indem sie die Fördereinheit oder den Wasserspeicher beschädigen oder dessen Speichervolumen verringern, ist erfindungsgemäß weiterhin vorgesehen, dass die Fördereinheit wurzeldicht an den Wasserspeicher anschließt. Dies kann beispielsweise mithilfe von Dichtungsmaterial erreicht werden, welches wurzelhemmend ausgestaltet ist und dort verläuft, wo die Fördereinheit an den Wasserspeicher anschließt. Oder dies kann mithilfe einer wurzeldichten Manschette erreicht werden, oder dadurch, dass die Fördereinheit mit dem Wasserspeicher verklebt oder verschweißt wird. Oder es kann der Anschluss der Fördereinheit an den Wasserspeicher eine Fügelinie aufweisen, die in Art einer Labyrinthdichtung mit mehreren Umlenkungen verläuft, so dass eine so genannte Wurzelfalle geschaffen wird. Auch können zwei oder mehr dieser genannten Maßnahmen in Kombination angewendet werden, um die Fördereinrichtung wurzelfest auszugestalten.

Auch am oberen Ende der Fördereinheit kann das Eindringen von Wurzeln in die Fördereinheit durch deren wurzelfeste Ausgestaltung verhindert werden. In einer Ausgestaltung ist das obere Ende der Fördereinheit mit einer wasserdurchlässigen und wurzelfesten Membran abgedeckt, beispielsweise in Form eines Geotextils, so dass Wasser durch diese Membran hindurch in umgebendes Erdreich gelangen und von den Wurzeln aufgenommen werden kann.

In einer anderen Ausgestaltung schließt am oberen Ende der Fördereinheit eine Abdichtungsscheibe oder eine Vergussmasse einerseits an das Kapillarmaterial und andererseits an die Ummantelung wurzeldicht an, also so dicht, dass das Eindringen von Wurzeln verhindert ist und das obere Ende der Fördereinheit somit wurzelfest abgedichtet ist. Wenn das Kapillarmaterial aus einem Kern und einem den Kern umgebenden Füllmaterial besteht, kann die Abdichtungsscheibe oder die Vergussmasse das Füllmaterial nach oben abdecken und sich von der Ummantelung bis an den Kern erstrecken. Eine Geometrie mit Vorsprüngen und Vertiefungen, z.B. umlaufenden Rippen und / oder Nuten, kann diesen dichten Anschluss der Abdichtungsscheibe oder des Vergussmaterials an die Ummantelung und / oder an den Kern unterstützen.

In einer Ausgestaltung ist eine solche Geometrie mit Vorsprüngen und Vertiefungen, z.B. mit umlaufenden Rippen und / oder Nuten, zwischen der Ummantelung und einem ausreichend formstabilen, seine Formgebung beibehaltenen Kapillarmaterial vorgesehen, um das Kapillarmaterial verschiebesicher in der Ummantelung zu halten, so dass das Kapillarmaterial gegen unerwünschte Verlagerungen, beispielsweise aufgrund des Schwerkrafteinflusses, gesichert ist.

In einer Ausgestaltung kann eine Ummantelung auch dann vorgesehen sein, wenn das Kapillarmaterial selbst druckfest ausgestaltet ist und insofern keiner Ummantelung bedarf, um gegen den im Erdreich herrschenden Druck geschützt zu werden. In diesem Fall kann eine Ummantelung dazu dienen, die Abgabe von Wasser aus dem Kapillarmaterial an das umgebende Erdreich auf bestimmte Zonen zu beschränken. Beispielsweise kann in einem unteren Bereich der Fördereinheit das Kapillarmaterial freiliegen, so dass dort Wasser an die Umgebung abgegeben werden kann und beispielsweise tief reichende Wurzeln in tiefen Bodenschichten mit Wasser versorgt werden. Hierdurch wird verhindert, dass diese Wurzeln nach oben wachsen und Schäden an Gehwegen, Fahrbahnen oder Plätzen anrichten. Dieselbe Fördereinheit kann sich weiter aufwärts erstrecken und ummantelt sein, um eine Wasserabgabe in höheren Bodenschichten zunächst zu vermeiden. Erst noch weiter oben, beispielsweise nahe der Bodenoberfläche, kann die Fördereinheit wieder Kontakt mit dem umgebenden Erdreich haben, indem dort die Ummantelung fehlt, so dass beispielsweise flach wurzelnde Pflanzen wie Rasen, Blumen und dergleichen mit Wasser versorgt werden können.

Um wie oben erwähnt das Wurzelwachstum bewusst in die Tiefe richten zu können, kann sich das oberen Niveau, zu welchem die Fördereinheit das Wasser aus dem unteren Niveau des Wasserspeichers fördern soll, in einer vergleichsweise geringen Höhe über dem unteren Niveau befinden und somit in einem vergleichsweise großen Abstand zum Erdboden. Im Unterschied dazu, eine Öffnung unten im Wasserspeicher vorzusehen, wird eine vorschnelle Versickerung des Wassers vermieden, indem das Wasser aus dem Wasserspeicher mittels der Fördereinheit nach oben aus dem Wasserspeicher gefördert wird.

In einer Ausgestaltung ist die druckfeste Ummantelung als Rohr ausgestaltet, insbesondere als Kunststoffrohr. Derartige Rohre sind aus dem Bereich der Kanalisation bekannt. Sie haben sich in der Praxis bewährt und sind dementsprechend gut geeignet für ihre Verwendung als druckfeste Ummantelung im Rahmen der vorliegenden Erfindung. Durch minimale Änderung, z.B. durch Entfernung eines Muffen-Endes, kann ein handelsübliches Kanalrohr bearbeitet werden, um ein solches Ummantelungs-Rohr zu bilden. Ggf. kann sogar die Anschlussgeometrie, wie sie für Kanalrohre üblich ist, nämlich die Ausgestaltung mit einem Muffen-Ende und einem Spitz-Ende, für den Anschluss an den Wasserspeicher genutzt werden, indem dieselbe Anschlusstechnologie verwendet wird, wie sie beim Anschluss von abzweigenden Rohrleitungen an ein Hauptrohr aus der Praxis bekannt ist. Auf diese Weise wird eine besonders wirtschaftliche Ausgestaltung der Vertikal-Fördereinheit sowie der gesamten Vertikal-Fördereinrichtung unterstützt.

In einer Ausgestaltung wird ein unterirdischer Tank als Wasserspeicher verwendet, der aus einer Vielzahl einzelner Kunststoffelemente besteht, wie sie auch zur Schaffung eines Versickerungstanks genutzt werden. Durch Verwendung einer wasserdichten Umhüllung statt eines für Wasser durchlässigen Geotextils wird das Wasser nicht versickert, sondern gespeichert und kann über einen längeren Zeitraum durch die Fördereinheit nach oben abgegeben werden.

In einer anderen Ausgestaltung wird der Wasserspeicher durch ein Rohr gebildet. Beispielsweise kann auch hierfür ein Kanalisationsrohr verwendet werden, welches lediglich an seinen beiden axialen Enden abgedichtet werden muss, um einen Wassertank zu bilden und somit als Wasserspeicher verwendet werden zu können. Hierzu können wirtschaftlich besonders vorteilhaft beispielsweise Rohrkappen verwendet werden, wenn das Handelsprogramm eines Herstellers zu dem jeweiligen Rohr, welches den Wasserspeicher bildet, auch derartige Rohrkappen enthält. Zur Vergrößerung des Speichervolumens können zwei oder mehr Rohre gleicher oder unterschiedlicher Größe genutzt werden, die durch entsprechende Verbindungsrohre hydraulisch miteinander verbunden sind und so insgesamt einen Wasserspeicher mit entsprechend großem Fassungsvermögen bilden.

Der Zulauf von Niederschlagswasser in einen rohrförmigen Wasserspeicher kann entweder axial erfolgen, zum Beispiel indem ein das Niederschlagswasser heranführendes Rohr in die erwähnte Rohrkappe mündet. Alternativ kann der Zulauf radial an den Wasserspeicher anschließen, zum Beispiel mittels eines Sattelstücks, wie dies aus dem Bereich der Kanalisationstechnik zum Anschluss von Nebenrohren an eine Hauptrohrleitung bekannt und handelsüblich ist.

Das Kapillarmaterial weist in einer Ausgestaltung mehrere separate Abschnitte auf. Dies erleichtert den Transport zur Baustelle und dort die Montage der Fördereinrichtung, insbesondere der Fördereinheit. Angesichts einer Geometrie der Fördereinheit, die in Bezug zu ihrem Querschnitt eine vergleichsweise große Länge aufweist, und angesichts einer geringen Biegefestigkeit des keramischen Materials bewirkt die Aufteilung auf mehrere Abschnitte insbesondere wenn das Kapillarmaterial aus einem festen keramischen Werkstoff besteht, einen hervorragenden Schutz gegen Beschädigungen, insbesondere gegen Bruch. In diesem Fall bewirkt die Aufteilung auf mehrere Abschnitte in Längsrichtung der Fördereinheit, dass das Kapillarmaterial in Förderrichtung des Wassers an einer oder mehreren Stellen unterbrochen ist. Aufgrund der mehreren Abschnitte ergibt sich auch die problemlose Möglichkeit, an der Baustelle die Länge des Kapillarmaterials an die jeweils vorgefundenen örtlichen Verhältnisse anzupassen. Dies betrifft erstens, wie weit das Kapillarmaterial in den Wasserspeicher eintauchen soll, und zweitens bis zu welchem Abstand von der Bodenoberfläche es reichen soll. Zur Pflanzenbewässerung endet das Kapillarmaterial typischerweise unterhalb der Bodenoberfläche, während es sich zur Verdunstung des gespeicherten Wassers typischerweise bis zur Oberfläche oder sogar noch darüber hinaus erstreckt.

Insbesondere wenn die Abschnitte des Kapillarmaterials nicht ausschließlich in einer einzigen Länge bereitgestellt werden, sondern in mehreren unterschiedlichen Längen, kann auf einfache Weise an der Baustelle die Gesamtlänge des Kapillarmaterials bestimmt werden, ohne das Kapillarmaterial zuschneiden zu müssen, z.B. auf Länge sägen zu müssen.

In einer Ausgestaltung wird zumindest die Fördereinheit als vorgefertigte Baugruppe bereitgestellt, die lediglich an den Wasserspeicher angeschlossen zu werden braucht. Alternativ dazu kann die komplette Fördereinrichtung als vorgefertigte Baugruppe bereitgestellt werden, so dass werksseitig eine wurzelfeste Ausgestaltung der Fördereinrichtung gewährleistet werden kann, insbesondere ein wurzelfester Anschluss der Fördereinheit an den Wasserspeicher.

In einer Ausgestaltung erweitert sich der Querschnitt des Kapillarmaterials am oberen Ende der Fördereinheit, um eine großflächige Versorgung mit Wasser zu ermöglichen, beispielsweise zur Pflanzenbewässerung oder zur Verdunstung.

Alternativ oder ergänzend dazu kann die Verteilung des Wassers über eine besonders große Fläche dadurch erreicht werden, dass das Kapillarmaterial am oberen Ende der Fördereinheit an ein zusätzlich vorgesehenes Verteilelement anschließt, beispielsweise an ein Geotextil, welches durch seine eigenen kapillaren Eigenschaften das Wasser aus der Fördereinheit absaugt und über seine Fläche verteilt. Durch ein solches Verteilelement ist es nicht erforderlich, das Kapillarmaterial an seinem oberen Ende besonders auszugestalten, beispielsweise im Vergleich zu tiefer liegenden Bereichen des Kapillarmaterials zu erweitern. Vielmehr kann ein wirtschaftlich erhältliches, handelsübliches Material wie z.B. das erwähnte Geotextil als Verteilelement verwendet und kapillar wirksam an das Kapillarmaterial angeschlossen werden, indem es mit dem Kapillarmaterial in Kontakt gebracht wird.

In einer Ausgestaltung weist das Kapillarmaterial eine andere Geometrie auf als die Ummantelung. In diesem Zusammenhang wird als Geometrie die grundsätzliche Querschnittsform, unabhängig von den reinen Abmessungen bezeichnet. Beispielsweise kann die Ummantelung einen kreisrunden Querschnitt aufweisen, während das Kapillarmaterial einen vom Kreisrund abweichenden Querschnitt aufweist, z.B. einen rechteckigen Querschnitt. Dies ermöglicht, einerseits handelsübliche vorgefertigte Bauelemente für die Ummantelung zu verwenden und andererseits ebenso handelsübliche vorgefertigte Bauelemente für das Kapillarmaterial zu verwenden, im Falle von Keramikmaterial beispielsweise Klinkersteine.

Bei solch abweichenden Geometrien weist die Fördereinheit in einer Ausgestaltung ein Füllmaterial auf, welches den Zwischenraum zwischen dem Kapillarmaterial und der Ummantelung ausfüllt. Dies dient einerseits dem Schutz gegen das Eindringen von Wurzeln und andererseits dazu, den unerwünschten, vorzeitigen Austritt von Wasser aus dem Kapillarmaterial zu verhindern, welches ansonsten ggf. außen an dem Kapillarmaterial in den Wasserspeicher zurückfließen könnte. Bevorzugt wird dabei ein Füllmaterial verwendet, welches als Füllmasse keine fest vorgegebene eigene Formgebung aufweist und daher den erwähnten Zwischenraum vollständig und lückenlos ausfüllen kann. Weiterhin wird bevorzugt ein solches Füllmaterial verwendet, welches selbst benetzende kapillare Eigenschaften aufweist, wie beispielsweise Gips oder Lehm. Diese Eigenschaften dienen auch dazu, Spalten im Kapillarmaterial zu überbrücken, beispielsweise wenn ein Kern des Kapillarmaterial aus mehreren separaten Abschnitten besteht und auf diese Weise in Förderrichtung des Wassers an einer oder mehreren Stellen unterbrochen ist.

Dort, wo die Fördereinrichtung oder deren Fördereinheit wurzeldichte Anschlüsse benachbarter Bauteile aufweist, können die beteiligten Komponenten wie z.B. Rippen, Abdeckscheiben, Vergussmassen, Klebstoffe, Dichtungsringe, Manschetten oder dergleichen abgesehen von ihrer rein geometrischen Funktion auch einen chemischen Wurzelschutz ermöglichen, wenn diese Komponenten einen wurzelhemmenden Stoff enthalten oder mit einer Beschichtung versehen sind, die einen wurzelhemmenden Stoff enthält.

Die Erfindung betrifft also eine Vertikal-Fördereinheit für Wasser, die ein Kapillarmaterial mit benetzender Kapillarwirkung aufweist und im Gebrauch in der Art angeordnet ist, dass sie sich von einem Wasser führenden, unteren Niveau aufwärts bis zu einem höher liegenden, oberen Niveau erstreckt, wobei das Kapillarmaterial druckfest ausgestaltet ist oder eine druckfeste Ummantelung aufweist.

Die Fördereinheit kann derart ausgestaltet sein, dass das Kapillarmaterial Fasern enthält und eine faserige Struktur aufweist.

Die Fördereinheit kann derart ausgestaltet sein, dass das Kapillarmaterial eine poröse Struktur aufweist.

Die Fördereinheit kann derart ausgestaltet sein, dass das Kapillarmaterial als verformbare Masse vorliegt.

Die Fördereinheit kann derart ausgestaltet sein, dass das Kapillarmaterial als formstabiler Körper vorliegt.

Die Fördereinheit kann einen Kern und ein den Kern radial umgebendes Füllmaterial aufweisen, wobei sowohl der Kern als auch das Füllmaterial als Kapillarmaterial mit benetzender Kapillarwirkung ausgestaltet ist, der Kern druckfest ausgestaltet ist, und das Füllmaterial verformbar ist, wobei das Füllmaterial druckfest ummantelt ist und das Füllmaterial einen Zwischenraum zwischen dem Kern und der Ummantelung ausfüllt.

Die Fördereinheit kann derart ausgestaltet sein, dass der Kern eine Mehrzahl einzelner, jeweils druckfest ausgestalteter Elemente aufweist.

Die Fördereinheit kann derart ausgestaltet sein, dass die Elemente in Längsrichtung des Kerns aneinandergereiht angeordnet sind.

Die Fördereinheit kann derart ausgestaltet sein, dass auch zwischen den Elementen des Kerns Füllmaterial angeordnet ist.

Die Fördereinheit kann derart ausgestaltet sein, dass die Ummantelung das Füllmaterial an dessen unterem Stirnende abdeckt, wobei die Ummantelung das Füllmaterial zurückhaltend ausgestaltet ist.

Die Fördereinheit kann derart ausgestaltet sein, dass der Kern über das untere Stirnende des Füllmaterials hinaus nach unten ragt.

Die Fördereinheit kann derart ausgestaltet sein, dass das obere Ende der Fördereinheit wurzelfest ausgestaltet ist.

Die Fördereinheit kann derart ausgestaltet sein, dass das obere Ende der Fördereinheit mit einer wasserdurchlässigen und wurzelfesten Membran abgedeckt ist.

Die Fördereinheit kann derart ausgestaltet sein, dass am oberen Ende der Fördereinheit eine als Abdichtungsscheibe oder Vergussmasse ausgestaltete Abschirmung einerseits an das Kapillarmaterial und andererseits an eine das Kapillarmaterial umgebende Ummantelung wurzeldicht anschließt.

Die Fördereinheit kann derart ausgestaltet sein, dass das Kapillarmaterial aus einem Kern und einem den Kern umgebenden Füllmaterial besteht, und dass die Abschirmung das Füllmaterial nach oben abdeckt und sich von der Ummantelung bis an den Kern erstreckt.

Die Fördereinheit kann derart ausgestaltet sein, dass sich der Querschnitt des Kapillarmaterials am oberen Ende der Fördereinheit erweitert.

Die Fördereinheit kann derart ausgestaltet sein, dass mittels einer Geometrie mit Vorsprüngen und Vertiefungen, die ein ausreichend formstabiles, seine Formgebung beibehaltenes Kapillarmaterial und eine das Kapillarmaterial umgebende Ummantelung aufweisen, das Kapillarmaterial verschiebesicher in der Ummantelung gehalten ist.

Die Fördereinheit kann derart ausgestaltet sein, dass eine das Kapillarmaterial umgebende Ummantelung in der Art angeordnet ist, dass im Gebrauch die Abgabe von Wasser aus dem Kapillarmaterial an das umgebende Erdreich auf bestimmte Zonen der Fördereinheit beschränkt ist.

Die Fördereinheit kann derart ausgestaltet sein, dass die druckfeste Ummantelung als Rohr ausgestaltet ist.

Die Fördereinheit kann derart ausgestaltet sein, dass die Ummantelung aus einem genormten Rohr hergestellt ist, welches an ebenfalls genormte Steckmuffen gemäß der DIN EN 1401 anschließbar ist.

Die Fördereinheit kann derart ausgestaltet sein, dass das Kapillarmaterial mit einer wasserdichten Ummantelung versehen ist.

Die Erfindung betrifft weiterhin eine Vertikal-Fördereinrichtung für Wasser, mit einem Wasserspeicher und mit einer Fördereinheit wie oben beschrieben, wobei sich das Kapillarmaterial der Fördereinheit nach unten bis in den Wasserspeicher erstreckt, und die Fördereinheit wurzeldicht an den Wasserspeicher anschließt.

Die Fördereinrichtung kann derart ausgestaltet sein, dass sich das Kapillarmaterial der Fördereinheit im Wesentlichen bis zum Boden des Wasserspeichers erstreckt.

Die Fördereinrichtung kann derart ausgestaltet sein, dass sich das Kapillarmaterial der Vertikal-Fördereinheit von dem unteren Niveau über eine Höhendifferenz von wenigstens 50 cm, insbesondere wenigstens 80 cm, bis zu dem oberen Niveau erstreckt.

Die Fördereinrichtung kann derart ausgestaltet sein, dass das Kapillarmaterial am oberen Ende der Fördereinheit an ein zusätzlich vorgesehenes Verteilelement anschließt.

Die Fördereinrichtung kann derart ausgestaltet sein, dass das Verteilelement als Geotextil ausgestaltet ist.

Die Erfindung betrifft schließlich auch die Verwendung eines Kapillarmaterials mit benetzender Kapillarwirkung, das druckfest ausgestaltet oder druckfest ummantelt ist, in einer Vertikal-Fördereinheit für Wasser in der Art, dass sich das Kapillarmaterial förderwirksam von einem Wasser führenden, unteren Niveau einer Freispiegelleitung oder eines künstlich angelegten Wasserreservoirs aufwärts bis zu einem höher liegenden, oberen Niveau erstreckt.

Ausführungsbeispiele der Erfindung werden anhand der rein schematischen Darstellungen nachfolgend näher erläutert. Dabei zeigt
- Fig. 1 bis 3: Ansichten eines ersten Ausführungsbeispiels einer Vertikal-Fördereinrichtung für Wasser,
- Fig. 4 bis 6: Ansichten auf ein zweites Ausführungsbeispiel,
- Fig. 7 und 8: Ansichten auf ein drittes Ausführungsbeispiel, und
- Fig. 9 und 10: Ansichten auf ein viertes Ausführungsbeispiel.

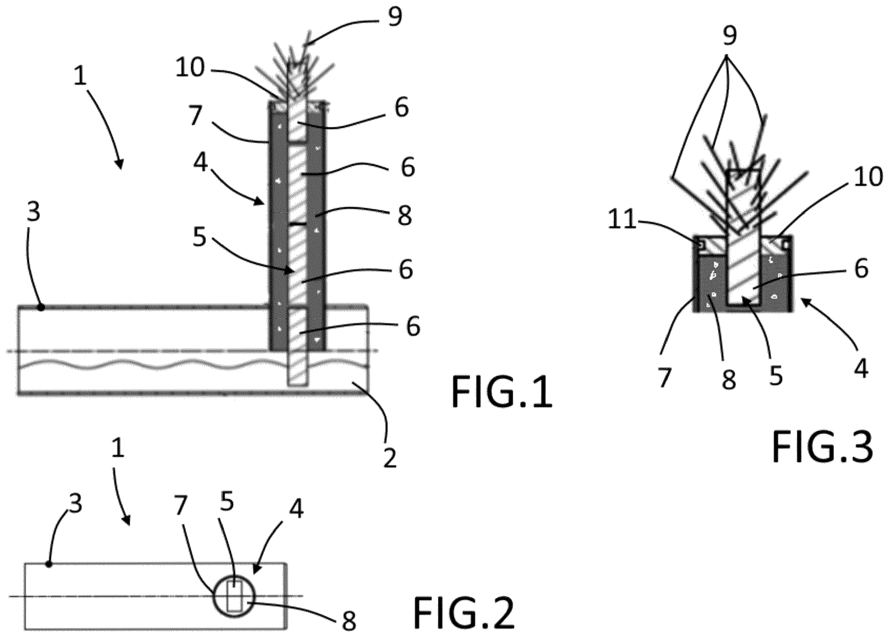

Fig. 1 zeigt einen Vertikalschnitt durch eine Vertikal-Fördereinrichtung 1 für Wasser 2, die im Boden angeordnet ist, also von Erdreich oder dergleichen umgeben ist. Die Fördereinrichtung 1 weist einen Wasserspeicher 3 auf, der bei dem dargestellten Ausführungsbeispiel als liegend angeordneter, rohrförmigen Tank ausgestaltet ist, wobei eine Einlassöffnung des Wasserspeichers 3 und auch eine Leitung, welche das als Oberflächenwasser anfallende Wasser 2 zu der Einlassöffnung führt, in Fig. 1 nicht dargestellt sind.

An den Wasserspeicher 3 schließt eine Vertikal-Fördereinheit 4 an, die bei dem dargestellten Ausführungsbeispiel vertikal ausgerichtet ist und geradlinig verläuft. Abweichend davon kann die Fördereinheit 4 auch schräg ausgerichtet sein und ungeradlinig, beispielsweise bogenförmig, wendelförmig oder dergleichen verlaufen. Auch derartige Fördereinheiten 4 werden als Vertikal-Fördereinheiten 4 bezeichnet, weil sie Wasser über einen bestimmten vertikalen Höhenunterschied nach oben fördern können. Die Förderwirkung der Fördereinheit 4 wird durch zwei unterschiedliche Arten von Kapillarmaterial erreicht, wobei ein Kern 5 aus mehreren Elementen 6 eines druckfesten, formbeständigen Kapillarmaterials besteht, bei dem dargestellten Ausführungsbeispiel in Form eines porösen, weich gebrannten Klinkers. Der Kern 5 ist innerhalb einer druckfesten Ummantelung 7 angeordnet, die bei dem dargestellten Ausführungsbeispiel als Kunststoffrohr ausgestaltet ist, nämlich in Form eines geringfügig abgeänderten handelsüblichen Kanalrohrs, welches zunächst mit einem Spitzende und einem Muffenende hergestellt worden ist und bei dem das Muffenende abgetrennt worden ist.

Der Kern 5 füllt den Innenraum der Ummantelung 7 nicht vollständig aus. In dem verbleibenden Zwischenraum ist ein zweites Kapillarmaterial angeordnet, nämlich eine grundsätzlich formlose Masse, die als Stampfmasse in den Zwischenraum eingebracht worden ist und als Füllmaterial 8 den Zwischenraum ausfüllt. Das Füllmaterial 8 ist wie der Kern 5 ebenfalls kapillar förderwirksam, es kann beispielsweise Gips oder Lehm enthalten. Das Füllmaterial 8 befindet sich auch jeweils zwischen zwei übereinander benachbarten Elementen 6, so dass eine kapillar förderwirksame Verbindung zwischen den Elementen 6 besteht.

Fig. 2 zeigt, dass sich der Querschnitt der Elemente 6 sowohl hinsichtlich der grundsätzlichen, rechtwinkligen Querschnittsgeometrie als auch hinsichtlich der Querschnitts-Abmessungen von dem inneren Querschnitt der Ummantelung 7 unterscheidet. Die Verformbarkeit des Füllmaterials 8 stellt sicher, dass der sich daraus ergebende Zwischenraum zwischen dem Kern 5 und der Ummantelung 7 vollständig ausgefüllt werden kann.

Der Kern 5 ragt nach unten aus der Ummantelung 7 heraus, so dass im Vergleich zur unteren Stirnfläche des Kerns 5 eine erheblich größere Oberfläche am unteren Ende des Kerns 5 bereitgestellt ist, um Wasser 2 aus dem Wasserspeicher 3 aufnehmen zu können. Dabei erstreckt sich der Kern 5 nahezu bis zum Boden des Wasserspeichers 3, um auch bei sinkendem Wasserspiegel möglichst lange noch Wasser 2 aus dem Wasserspeicher 3 aufwärts fördern zu können und somit die Speicherkapazität des Wasserspeichers 3 optimal ausnutzen zu können. Um den Kern 5 herum deckt die Ummantelung 7 das untere Stirnende des Füllmaterials 8 ab, so dass dieses nicht im Wasser 2 aus der Fördereinheit 4 herausgelöst oder ausgeschwemmt wird. Die Ummantelung 7 ist zu diesem Zweck mehrteilig ausgestaltet und weist einerseits einen zylindrischen Rohrabschnitt auf und andererseits die untere Abdeckung des Füllmaterials 8, die als handelsübliche Rohrkappe ausgestaltet sein kann und mit einem Ausschnitt für das untere Element 6 des Kerns 5 versehen ist.

Auch nach oben erstreckt sich der Kern 5 über die Ummantelung 7 hinaus. Rein schematisch sind mehrere Wurzeln 9 angedeutet, die an diesen das Wasser 2 abgebenden Überstand des Kerns 5 herangewachsen sind. Um das Eindringen der Wurzeln 9 in die Fördereinheit 4 zu verhindern, was bis zum Eindringen der Wurzeln 9 in den Wasserspeicher 3 führen könnte, ist die obere Stirnfläche des Füllmaterials 8 mit einer Abschirmung 10 versehen, wie aus Fig. 1 und in einem größeren Maßstab aus Fig. 3 erkennbar ist. Die Abschirmung 10 kann als Vergussmasse oder als eine Abdeckscheibe ausgestaltet sein und schließt mittels einer Verklebung wurzeldicht an die Ummantelung 7 an. Im Falle der Vergussmasse kann diese selbst die entsprechenden KlebeEigenschaften aufweisen. Eine innen umlaufende Rippe 11 auf der Innenseite der Ummantelung 7 wird sowohl oben als auch unten von der Abschirmung 10 übergriffen und schafft somit in Art einer Labyrinthdichtung einen zusätzlichen Wurzelschutz.

Die Fördereinheit 4 schließt zudem wurzeldicht an den Wasserspeicher 3 an, wobei je nach den Materialien, aus denen die Ummantelung 7 und der Wasserspeicher 3 bestehen, die Abdichtung durch eine Verklebung oder durch eine Verschweißung dieser beiden Bauteile erreicht wird.

Abweichend von dem dargestellten Ausführungsbeispiel, bei dem die Wurzeln 9 an das oberste Element 6 des Kerns 5 heranreichen, kann die Fördereinrichtung 1 so hoch im Boden angeordnet sein, dass die Fördereinheit 4 über den Erdboden hinaus ins Freie ragt und ihr oberes Ende zur Verdunstung des Wassers 2 genutzt wird.

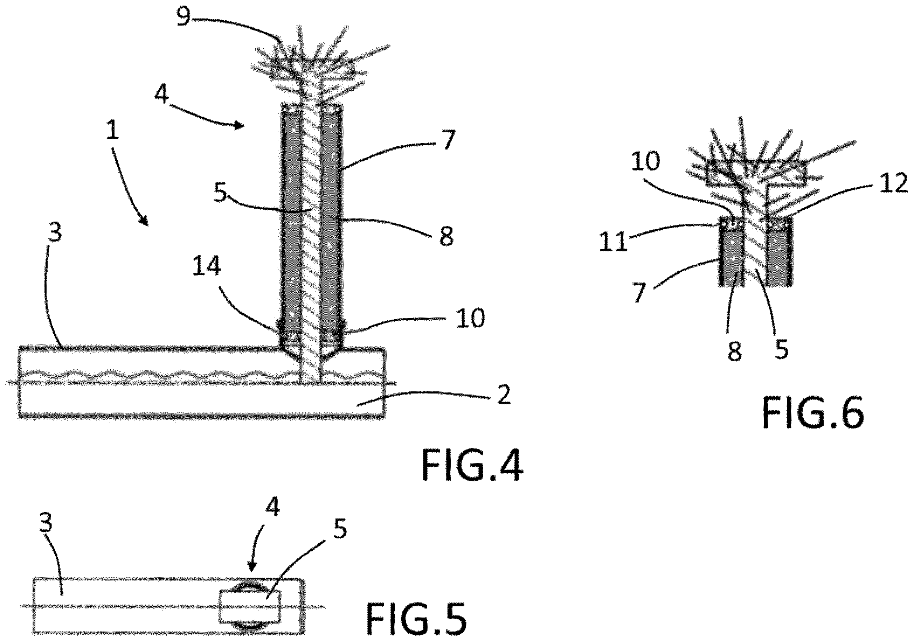

Die Fig. 4 bis 6 zeigen ein zweites Ausführungsbeispiel einer Fördereinrichtung 1, wobei der Kern 5 einteilig ausgestaltet ist und an seinem oberen Ende T-förmig ausgestaltet ist, so dass sich dort der Querschnitt des Kapillarmaterials erweitert, um das Wasser über einen größeren Bereich innerhalb des Erdreichs abzugeben oder, bei einer dementsprechend anderen Einbausituation der Fördereinrichtung 1, eine größere Verdunstungsfläche zu bieten.

Weiterhin ist bei dem zweiten Ausführungsbeispiel, wie aus Fig. 6 ersichtlich, nicht nur an der Innenseite der Ummantelung 7, sondern auch außen am Kern 5 eine umlaufende Rippe vorgesehen, die als Außenrippe 12 des Kerns 5 bezeichnet ist und am radial inneren Ende in die Abschirmung 10 eingreift, so dass durch die beiden Rippen 11 und 12 der Wurzelschutz verbessert ist.

Der Anschluss der Fördereinheit 4 an den Wasserspeicher 3 erfolgt bei dem zweiten Ausführungsbeispiel, wie aus Fig. 4 ersichtlich ist, mittels einer handelsüblichen Steckmuffe 14. Eine Abdeckung des unteren Stirnendes des Füllmaterials 8 wird bei diesem Ausführungsbeispiel nicht durch die Ummantelung 7 geschaffen, sondern durch eine untere Abschirmung 10, die wie die oberen, in den Figuren 3 und 6 dargestellten Abschirmungen 10 ausgestaltet ist.

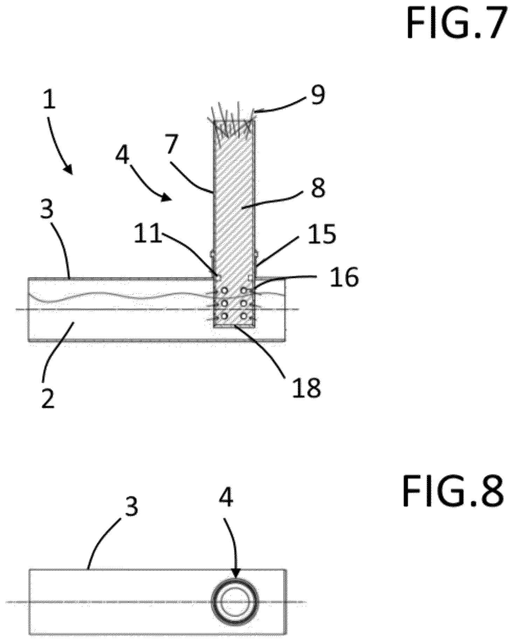

Die Fig. 7 und 8 zeigen ein Ausführungsbeispiel einer Fördereinrichtung 1, bei welchem die Fördereinheit 4 einschließlich ihrer Ummantelung 7 in eine Kunststoffmuffe 15 eingesetzt ist. Das Kapillarmaterial besteht bei diesem Ausführungsbeispiel ausschließlich aus dem Füllmaterial 8, welches somit die Ummantelung 7 ausfüllt, ohne einen Kern zu umgeben. Dementsprechend können, wie in Fig. 7 angedeutet, Wurzeln 9 von oben in die Fördereinheit 4 eindringen. Eine solche Ausgestaltung einer Fördereinrichtung 1 ist beispielsweise dort unkritisch, wo die Wurzeltiefe der Pflanzen, welche sich über der Fördereinrichtung 1 befinden, naturgegebene auf ein Maß begrenzt ist, welches Beschädigungen der Fördereinrichtung 1 ausschließt.

Im unteren Bereich der Ummantelung 7, wo sich diese innerhalb des Wasserspeichers 3 befindet, sind rein schematisch Öffnungen 16 in der Ummantelung 7 vorgesehen, die entweder so gering sind, dass sie das jeweils verwendete Füllmaterial 8 zuverlässig innerhalb der Fördereinheit 4 zurückhalten, oder die mit einem geeigneten Filterwerkstoff abgedeckt sind, der einerseits das Eindringen von Wasser 2 in die Fördereinheit 4 zulässt, dass Füllmaterial 8 jedoch zurückhält. Ein stirnseitiges Verschlusselement 18 am unteren Ende der Ummantelung 7 ist entweder wasserdicht ausgestaltet, z.B. in Form einer festen Platte, oder besteht ebenfalls aus einem wasserdurchlässigen Filterwerkstoff und hält jedenfalls das Füllmaterial 8 in der Fördereinheit 4 zurück.

Wenn das verwendete Kapillarmaterialjedoch nicht als verformbaren Masse, nämlich als Füllmaterial 8 ausgestaltet ist, sondern vielmehr als formstabiler, druckfester Körper, kann das Verschlusselement 18 abweichend von dem dargestellten Ausführungsbeispiel entfallen. In einem solchen Fall dient die Ummantelung 7 nicht als Schutz des Kapillarmaterials vor von außen einwirkenden Druckkräften, sondern als wasserdichte Ummantelung, um zu vermeiden, dass das Kapillarmaterial über die gesamte Höhe der Fördereinheit 4 Wasser in das Erdreich abgibt.

Auch bei dem Ausführungsbeispiel der Fig. 7 und 8 weist die Ummantelung 7 eine innen umlaufende Rippe 11 auf, die bei diesem Ausführungsbeispiel jedoch nicht als Wurzelschutz dient, sondern um das Kapillarmaterial formschlüssig innerhalb der Ummantelung 7 gegen Verlagerungen zu sichern, beispielsweise beim Transport der Fördereinheit 4 zur Baustelle, bevor das Kapillarmaterial in Kontakt mit Wasser kommt und beispielsweise so fest gestampft ist, dass es im trockenen Zustand eine ausreichende Formstabilität aufweist, um wie ein formstabiles, festes Bauteil mittels des Formschlusses innerhalb der Ummantelung 7 gehalten werden zu können.

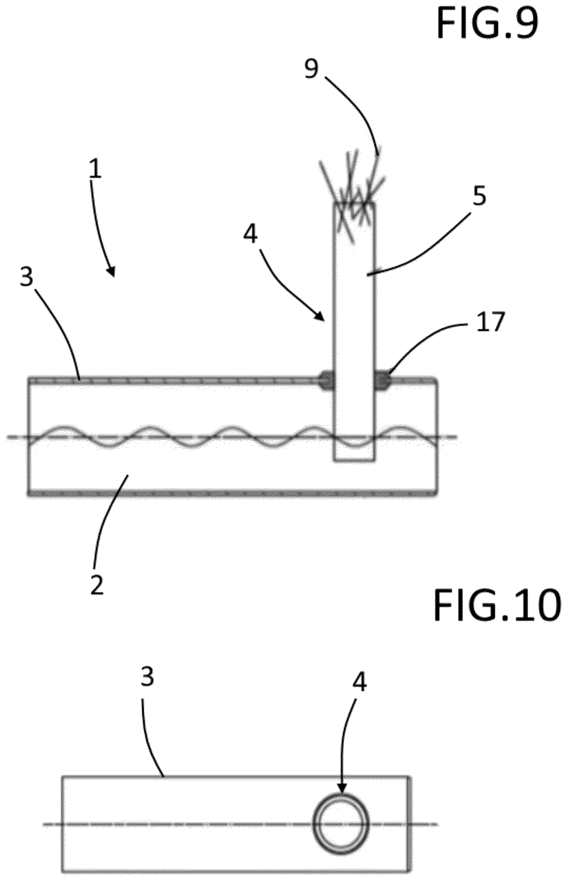

Die Fig. 9 und 10 zeigen ein Ausführungsbeispiel einer Fördereinrichtung 1, bei welchem die Fördereinheit 4 ohne eine Ummantelung 7 ausgestaltet ist und ausschließlich aus dem Kapillarmaterial besteht. Da das Kapillarmaterial druckfest ausgestaltet ist, ist es auch in diesem Fall als Kern 5 bezeichnet, auch wenn um den Kern 5 herum weder ein Füllmaterial 8 noch eine Ummantelung 7 angeordnet sind. Die Wurzeln 9 nehmen das Wasser 2 insbesondere am oberen Bereich des Kerns 5 ab, jedoch wird aufgrund des Wasserangebots auch entlang des Kerns 5 weiter nach unten das Wurzelwachstum gelenkt.

Eine wurzeldichte Abdichtung des Kerns 5 gegenüber dem Wasserspeicher 3 erfolgt mittels einer wurzeldichten Manschette 17. Die Manschette 17 kann als Formteil aus einem Elastomerwerkstoff ausgestaltet sein oder durch eine Vergussmasse gebildet sein.

### Bezugszeichen:

- 1: Fördereinrichtung
- 2: Wasser
- 3: Wasserspeicher
- 4: Fördereinheit
- 5: Kern
- 6: Element
- 7: Ummantelung
- 8: Füllmaterial
- 9: Wurzel
- 10: Abschirmung
- 11: Rippe
- 12: Außenrippe
- 14: Steckmuffe
- 15: Kunststoffmuffe
- 16: Öffnungen
- 17: Manschette
- 18: Verschlusselement

## Patentansprüche

1. Vertikal-Fördereinheit (4) für Wasser (2),
die ein Kapillarmaterial mit benetzender Kapillarwirkung aufweist
und im Gebrauch in der Art angeordnet ist, dass sie sich von einem Wasser (2) führenden, unteren Niveau aufwärts bis zu einem höher liegenden, oberen Niveau erstreckt, **dadurch gekennzeichnet,**
**dass** das Kapillarmaterial druckfest ausgestaltet ist oder eine druckfeste Ummantelung (7) aufweist.

2. Fördereinheit nach Anspruch 1,
**dadurch gekennzeichnet,**
**dass** das Kapillarmaterial Fasern enthält und eine faserige Struktur aufweist.

3. Fördereinheit nach Anspruch 1 oder 2,
**dadurch gekennzeichnet,**
**dass** das Kapillarmaterial eine poröse Struktur aufweist.

4. Fördereinheit nach Anspruch 3,
**dadurch gekennzeichnet,**
**dass** das Kapillarmaterial als verformbare Masse vorliegt, oder dass das Kapillarmaterial als formstabiler Körper vorliegt.

5. Fördereinheit nach einem der vorhergehenden Ansprüche, **gekennzeichnet durch**
einen Kern (5) und ein den Kern (5) radial umgebendes Füllmaterial (8),
wobei sowohl der Kern (5) als auch das Füllmaterial (8) als Kapillarmaterial mit benetzender Kapillarwirkung ausgestaltet ist,
der Kern (5) druckfest ausgestaltet ist,
und das Füllmaterial (8) verformbar ist,
das Füllmaterial (8) druckfest ummantelt ist,
und das Füllmaterial (8) einen Zwischenraum zwischen dem Kern (5) und der Ummantelung (7) ausfüllt.

6. Fördereinheit nach Anspruch 5,
**dadurch gekennzeichnet,**
**dass** der Kern (5) eine Mehrzahl einzelner, jeweils druckfest ausgestalteter Elemente (6) aufweist.

7. Fördereinheit nach Anspruch 6,
**dadurch gekennzeichnet,**
**dass** die Elemente (6) in Längsrichtung des Kerns (5) aneinandergereiht angeordnet sind.

8. Fördereinheit nach Anspruch 7,
**dadurch gekennzeichnet,**
**dass** auch zwischen den Elementen (6) des Kerns (5) Füllmaterial (8) angeordnet ist.

9. Fördereinheit nach einem der Ansprüche 5 bis 8,
**dadurch gekennzeichnet,**
**dass** die Ummantelung (7) das Füllmaterial (8) an dessen unterem Stirnende abdeckt,
wobei die Ummantelung (7) das Füllmaterial (8) zurückhaltend ausgestaltet ist,
oder dass der Kern (5) über das untere Stirnende des Füllmaterials (8) hinaus nach unten ragt.

10. Fördereinheit nach einem der vorhergehenden Ansprüche, **dadurch gekennzeichnet,**
**dass** das obere Ende der Fördereinheit (4) wurzelfest ausgestaltet ist.

11. Fördereinheit nach Anspruch 10,
**dadurch gekennzeichnet,**
**dass** das obere Ende der Fördereinheit (4) mit einer wasserdurchlässigen und wurzelfesten Membran abgedeckt ist,
oder dass am oberen Ende der Fördereinheit (4) eine als Abdichtungsscheibe oder Vergussmasse ausgestaltete Abschirmung (10) einerseits an das Kapillarmaterial und andererseits an eine das Kapillarmaterial umgebende Ummantelung (7) wurzeldicht anschließt.

12. Fördereinheit nach Anspruch 11,
**dadurch gekennzeichnet,**
**dass** das Kapillarmaterial aus einem Kern (5) und einem den Kern (5) umgebenden Füllmaterial (8) besteht,
und **dass** die Abschirmung (10) das Füllmaterial (8) nach oben abdeckt und sich von der Ummantelung (7) bis an den Kern (5) erstreckt.

13. Fördereinheit nach einem der vorhergehenden Ansprüche, **dadurch gekennzeichnet,**
**dass** sich der Querschnitt des Kapillarmaterials am oberen Ende der Fördereinheit (4) erweitert.

14. Fördereinheit nach einem der vorhergehenden Ansprüche, **dadurch gekennzeichnet,**
**dass** mittels einer Geometrie mit Vorsprüngen und Vertiefungen, die ein ausreichend formstabiles, seine Formgebung beibehaltenes Kapillarmaterial und eine das Kapillarmaterial umgebende Ummantelung (7) aufweisen, das Kapillarmaterial verschiebesicher in der Ummantelung (7) gehalten ist.

15. Fördereinheit nach einem der vorhergehenden Ansprüche, **dadurch gekennzeichnet,**
**dass** eine das Kapillarmaterial umgebende Ummantelung (7) in der Art angeordnet ist, dass im Gebrauch die Abgabe von Wasser (2) aus dem Kapillarmaterial an das umgebende Erdreich auf bestimmte Zonen der Fördereinheit (4) beschränkt ist.

16. Fördereinheit nach einem der vorhergehenden Ansprüche, **dadurch gekennzeichnet,**
**dass** die druckfeste Ummantelung (7) als Rohr ausgestaltet ist.

17. Fördereinheit nach Anspruch 16,
**dadurch gekennzeichnet,**
**dass** die Ummantelung (7) aus einem genormten Rohr hergestellt ist, welches an ebenfalls genormte Steckmuffen gemäß der DIN EN 1401 anschließbar ist.

18. Fördereinheit nach einem der vorhergehenden Ansprüche, **dadurch gekennzeichnet,**
**dass** das Kapillarmaterial mit einer wasserdichten Ummantelung (7) versehen ist.

19. Vertikal-Fördereinrichtung (1) für Wasser (2),
mit einem Wasserspeicher (3)
und mit einer Fördereinheit (4) nach einem der vorhergehenden Ansprüche,
wobei sich das Kapillarmaterial der Fördereinheit (4) nach unten bis in den Wasserspeicher (3) erstreckt,
und die Fördereinheit (4) wurzeldicht an den Wasserspeicher (3) anschließt.

20. Fördereinrichtung nach Anspruch 19,
**dadurch gekennzeichnet,**
**dass** sich das Kapillarmaterial der Fördereinheit (4) im Wesentlichen bis zum Boden des Wasserspeichers (3) erstreckt.

21. Fördereinrichtung nach Anspruch 19 oder 20,
**dadurch gekennzeichnet,**
**dass** sich das Kapillarmaterial der Vertikal-Fördereinheit (4) von dem unteren Niveau über eine Höhendifferenz von wenigstens 50 cm, insbesondere wenigstens 80 cm, bis zu dem oberen Niveau erstreckt.

22. Fördereinrichtung nach einem der Ansprüche 19 bis 21,
**dadurch gekennzeichnet,**
**dass** das Kapillarmaterial am oberen Ende der Fördereinheit (4) an ein zusätzlich vorgesehenes Verteilelement anschließt.

23. Verwendung eines Kapillarmaterials mit benetzender Kapillarwirkung, das druckfest ausgestaltet oder druckfest ummantelt ist, in einer Vertikal-Fördereinheit (4) für Wasser in der Art, dass sich das Kapillarmaterial förderwirksam von einem Wasser (2) führenden, unteren Niveau einer Freispiegelleitung oder eines künstlich angelegten Wasserreservoirs aufwärts bis zu einem höher liegenden, oberen Niveau erstreckt.
